(19) Europäisches Patentamt
European Patent Office
Office européen des brevets

(11) **EP 1 611 757 B1**

(12) **EUROPÄISCHE PATENTSCHRIFT**

(45) Veröffentlichungstag und Bekanntmachung des Hinweises auf die Patenterteilung:
**09.09.2009   Patentblatt 2009/37**

(51) Int Cl.:
***H04W 24/00*** (2009.01)

(21) Anmeldenummer: **04725279.6**

(22) Anmeldetag: **02.04.2004**

(86) Internationale Anmeldenummer:
**PCT/DE2004/000715**

(87) Internationale Veröffentlichungsnummer:
**WO 2004/091103 (21.10.2004 Gazette 2004/43)**

(54) **VERFAHREN ZUR ANALYSE DER INTERFERENZ- UND VERSORGUNGSSITUATION IN UMTS-TEILNETZEN**

METHOD FOR ANALYSING THE INTERFERENCE AND SUPPLY SITUATION IN UMTS SUB-NETWORKS

PROCEDE D'ANALYSE DE LA SITUATION D'INTERFERENCE ET DE MISE A DISPOSITION DANS DES SOUS-RESEAUX UMTS

(84) Benannte Vertragsstaaten:
**AT BE BG CH CY CZ DE DK EE ES FI FR GB GR HU IE IT LI LU MC NL PL PT RO SE SI SK TR**

(30) Priorität: **04.04.2003   DE 10315629**

(43) Veröffentlichungstag der Anmeldung:
**04.01.2006   Patentblatt 2006/01**

(73) Patentinhaber: **T-Mobile Deutschland GmbH
53227 Bonn (DE)**

(72) Erfinder:
• **BEYER, Jürgen
57250 Netphen (DE)**
• **BRÜCKEN, Reinhold
50937 Köln (DE)**

(74) Vertreter: **Riebling, Peter
Patentanwalt
Dr.-Ing. Peter Riebling
Postfach 3160
88113 Lindau (DE)**

(56) Entgegenhaltungen:
EP-A- 1 168 689      WO-A-01/45284
WO-A-03/003775      DE-A- 4 302 228

• **AGILENT TECHNOLOGIES: "Optimizing Your CDMA Wireless Network Today and Tomorrow Application Note-1345 Using Drive-Test Solutions"[Online] April 2000 (2000-04), pages 1-16, XP002299250 Retrieved from the Internet: URL:http://cp.literature.agilent.com/litwe b/pdf/ 5968-9916E.pdf> [retrieved on 2004-10-05]**
• **DYNAMIC TELECOMMUNICATIONS, INC.: "Drive Testing for Optimizing WCDMA Wireless Networks?"[Online] January 2003 (2003-01), pages 1-12, XP002299251 Retrieved from the Internet: URL:http://www.dynatele.com/ WhitePapers/Fi nal%20WCDMA%20NetWk%20Feb03%20pdf/ Final%20 WCDMA%20WhitePaper.pdf> [retrieved on 2004-10-05]**
• **LAIHO J ET AL: "RADIO NETWORK PLANNING PROCESS AND METHODS FOR WCDMA METHODES ET PROCESSUS POUR LA PLANIFICATION DES RESEAUX RADIO WCDMA" ANNALES DES TELECOMMUNICATIONS - ANNALS OF TELECOMMUNICATIONS, PRESSES POLYTECHNIQUES ET UNIVERSITAIRES ROMANDES, LAUSANNE, CH, vol. 56, no. 5/6, May 2001 (2001-05), pages 317-331, XP001082133 ISSN: 0003-4347**

**Beschreibung**

Die Erfindung betrifft ein Verfahren zur Analyse der Interferenz- und Versorgungssituation in UMTS-Teilnetzen (Universal Mobile Telecommunication System).

UMTS-Netze basieren auf ATM (Asynchronous Transfer Mode) und IP (Internet Protocol) und ermöglichen die Übertragung leitungs- und paketorientierter Dienste. Dafür sorgt eine neue Luftschnittstelle für den Mobilfunk, die unterschiedliche Formate effizient übertragen kann. In Europa und Japan basiert die Luftschnittstelle auf der WCDMA-Funktechnik (Wideband Code Division Multiple Access). Damit lässt sich eine GSM-Infrastruktur in ein UMTS-Netz migrieren. Mit WCDMA erhält Europa als weltweit wichtigster Mobilfunkmarkt einen einheitlichen UMTS-Standard. Damit wird auch mobile Breitbandkommunikation mit Japan möglich. Der dort genutzte PDC-Standard (Personal Digital Cellular) lässt sich leicht in WCDMA integrieren. In Amerika gibt es dagegen nur wenige GSM-Netze. Die Mehrzahl der Netze basiert auf cdmaOne oder IS95. Diese Netze migrieren in der dritten Mobilfunkgeneration zu CDMA 2000 (Code Division Multiple Access) und sind mit WCDMA kompatibel. Das WCDMA-Modulationsverfahren beruht nicht mehr auf Zeitschlitzen (Time Division) und die Frequenz wird "breit" (wideband) genutzt: Mit 5 MHz sind die Übertragungsfrequenzen 25-mal so breit wie bei GSM mit nur 200 kHz. Diese Ausbreitungseigenschaften wirken sich sowohl auf die Zellenkapazität und damit auf die Netzplanung als auch auf die Empfangsqualität aus. In Zeiten geringen Bedarfs eines Nutzers kann ein anderer die Kanäle nutzen. Auch kann ein Nutzer zugleich mehrere Datenflüsse, z.B. telefonieren, faxen, E-Mails abrufen, eine Datei aus dem Netz laden und surfen gleichzeitig, betreiben.

Aus Erfahrungen mit IS95 CDMA-Netzen und ersten Untersuchungen in WCDMA-Netzen erscheint es als sehr wichtig, unter Einbeziehung von Messdaten eine Optimierung der Funkfeldversorgung durchzuführen. Dazu wird das UMTS-Netz zunächst vermessen und die vorhandene Interferenz- und Versorgungssituation ermittelt. Mit dem im folgenden beschrieben Verfahren wird beides bestimmt, wobei als Grundlage lediglich Daten von Pilotkanal-Messungen dienen.

Grundlage der Interferenzanalyse bilden Interferenzmatrizen. Als ein Ergebnis der Pilotkanal-Messungen erhält man für jeden Messpunkt die Pilotkanal-Empfangsleistung von mehreren Basisstationen. Damit ist die Möglichkeit gegeben, eine messdatenbasierte Interferenzmatrix zu erstellen. Dabei werden innerhalb eines lokal begrenzten Gebietes (=Pixel) die versorgende sowie die störenden Basisstationen ermittelt. Führt man dies über das gesamte Messgebiet durch, so erhält man für alle Basisstationen in diesem Gebiet eine Aussage darüber, wie sehr diese andere Zellen stören. In diesem Dokument wird beschrieben, wie die Interferenzmatrix erstellt wird und es werden zwei unterschiedliche Inhalte der Interferenzmatrix eingeführt.

Das Dokument WO 01 45284 A1 offenbart ein Verfahren bei dem mittels Simulation die Performance eines CDMA Netzes berechnet. Zur Durchführung der Simulation werden entsprechende Eingangsparameter benötigt. Für die Bestimmung der Performance sind hier beispielsweise Best Server, Traffic Load, Power, Interference genannt. Es wird die Stärke des Pilotkanals und die Interferenz an jedem Ort des Netzwerkes simuliert.

Die DE 43 02 228 A1 beschreibt ein Verfahren zur Zuweisung von Frequenzen zu Basisstationen eines Mobilfunknetzes. Hierbei sind Eingangsinformationen notwendig die aus anderen Simulationen stammen. Weiterhin ist dieses Verfahren für die Frequenzvergabe in einem GSM-Netz ausgelegt. Das Verfahren verwendet Interferenzwahrscheinlichkeiten, die in Matrizenform dargestellt werden. Im Unterschied zu einem GSM-Netz ist stellt ein CDMA-Netz ein Interferenz betriebenes Netz dar, d.h. alle Stationen senden auf der gleichen Frequenz.

Die Aufgabe der Erfindung besteht darin, ein Verfahren zur Analyse der Interferenz- und Versorgungssituation in UMTS-Teilnetzen anzugeben, anhand dessen nicht versorgte Gebiete und der Grund für deren Nichtversorgung bestimmt werden können. Es soll auch möglich sein zu bestimmen, welcher Dienst an welchem Ort zur Verfügung steht.

Diese Aufgabe wird erfindungsgemäß durch die Lehre des unabhängigen Patentanspruchs gelöst.

Vorteilhafte Ausgestaltungen und Weiterbildungen der Erfindung sind in den abhängigen Patentansprüchen angegeben.

Die Erfindung ermöglicht eine Untersuchung der Interferenz- und Versorgungssituation für die verschiedensten Dienste unter Berücksichtigung der Verkehrslast und die Rückführung der Messdaten auf die Basis ohne Verkehrslast.

Bei der Analyse des Netzes ist es von großem Interesse, welcher Dienst an welchem Ort zur Verfügung steht. Die Erfindung ermöglicht es, auf Grundlage der Pilotkanal-Messdaten Aussagen über die Diensteverfügbarkeit zu treffen, wobei die Auslastung des Netzes durch aktive Nutzer berücksichtigt wird. Damit können nicht versorgte Gebiete erkannt werden und es wird der Grund für Nichtversorgung genannt.

Fasst man beide Erkenntnisse zusammen, so ermöglichen die nachfolgend beschriebenen Verfahren auf Basis von einfachen Pilotkanal-Messungen notwendige und umfassende Analysen von UMTS-Netzen durchzuführen. Dies kann als Grundlage für weiterführende Optimierungsmaßnahmen dienen.

Ein Ausführungsbeispiel der Erfindung wird anhand der Zeichnungen erläutert. Aus den Zeichnungen und der nachfolgenden Beschreibung ergeben sich weitere Merkmale, Vorteile und Anwendungsmöglichkeiten der Erfindung.

Figur 1 ist eine graphische Darstellung der Einstellmöglichkeiten der Rahmenbedingungen zur Interferenzanalyse;

Figur 2 zeigt ein Beispiel einer Interferenzmatrix für eine Reihe von Basisstationen;

Figur 3 ist eine Interferenzmatrix (Summe) der Störer grafisch dargestellt;

Figur 4 ist eine Matrix, welche die Wahrscheinlichkeit [in %] der Störung bezogen auf die Fläche angibt;

Eingangsdaten

Die Basis für die beschriebenen Verfahren sind Messdaten, die von so genannten WCDMA-Scannern ermittelt werden. Diese Messgeräte detektieren downlink die sogenannten common control Kanäle (gemeinsame Kontrollkanäle zur Verbindungsaufnahme mit den Mobilstationen), die unabhängig von Verkehr permanent gesendet werden. Dies sind der primary common pilot channel, im folgenden als Pilotkanal bezeichnet, der primary synchronisation channel sowie der secondary syncronisation channel. Hier von Belang ist lediglich der Pilotkanal. Die im folgenden relevanten Meßdaten sind die Empfangsleistung des Pilotkanals (=$E_c$), die gesamte in dem betreffenden Frequenzband von 5 MHz vorliegende Interferenzleistung (=$I_0$) sowie das Verhältnis von $E_c/I_0$, das also die gemessene Leistung des Pilotkanals im Verhältnis zur gesamten (Stör)Signalleistung definiert. Die Zuordnung der Messwerte zu einer Basisstation erfolgt über den Scramblingcode (SC), der ebenfalls vom Messgerät detektiert und ausgewiesen wird. Alle diese Daten können pro Messpunkt für mehrere, z.B. acht Basisstationen, gleichzeitig erfasst werden.
Um eine höhere statistische Sicherheit zu erlangen, dienen als Grundlage der beschriebenen Verfahren nicht die Originalmessdaten, sondern vielmehr werden diese innerhalb konstanter Wegintervalle gemittelt. Bedingt durch die Abtastrate sowie statistischer Eigenschaften des Funkkanals sollte das Wegintervall mindestens 20m betragen.
Beide Verfahren setzen voraus, dass die Messdaten in einem begrenzten Gebiet möglichst flächendeckend vorliegen. Insbesondere bei Analyse der Interferenzmatrix kann es zu Fehlinterpretationen kommen, wenn die potentiellen Versorgungsgebiete einzelner Zellen nicht umfassend vermessen worden sind.

Interferenzanalyse

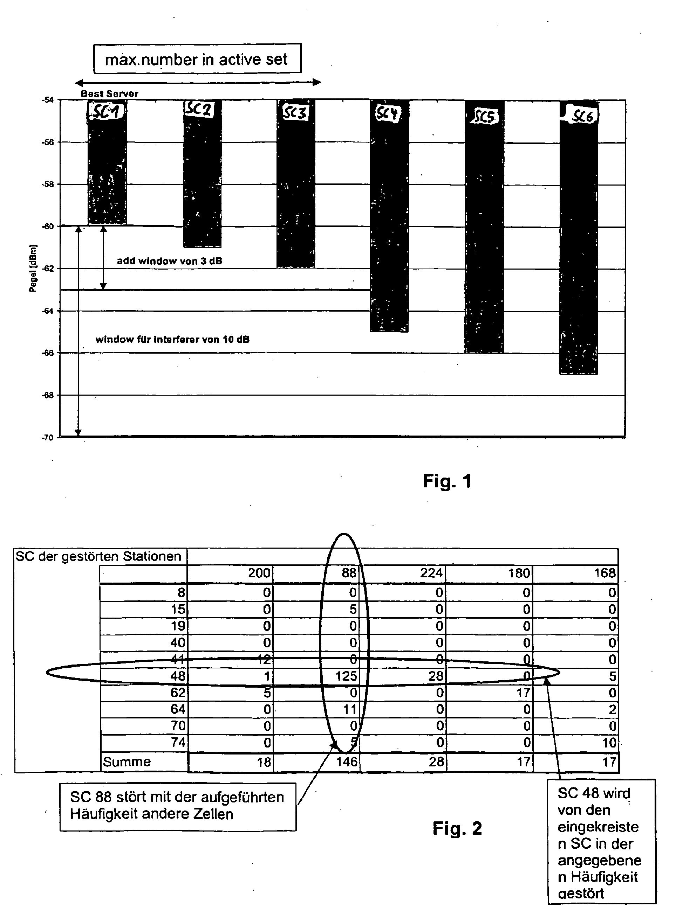

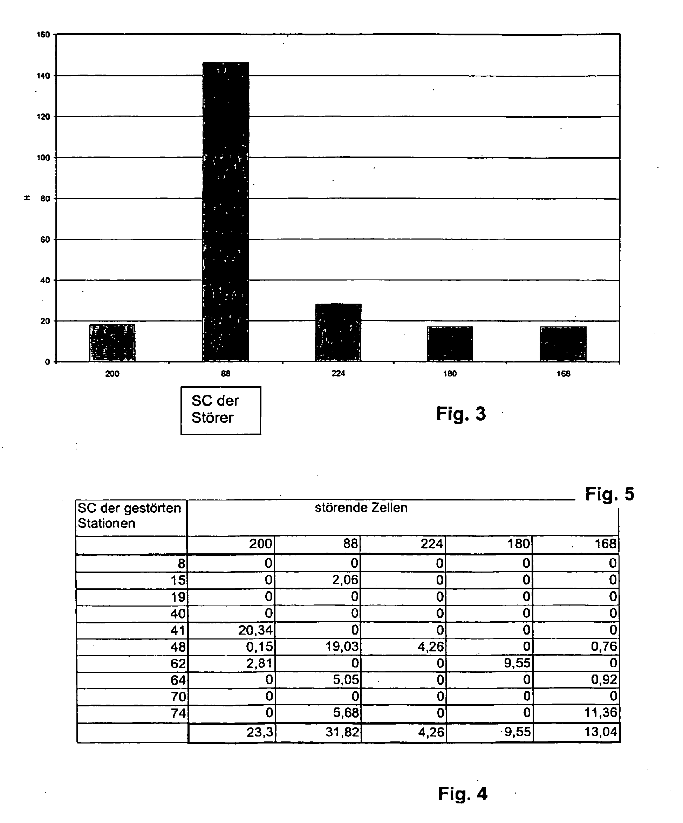

Bei der Interferenzanalyse spielen die sogenannte Rauschleistungsdichte $E_c/N_0$, das heißt die Energie pro Informationsbit im Verhältnis zur spektralen Rauschleistungsdichte am Eingang des Empfängers, und die Pilotpollution eine Rolle. Befindet sich eine Mobilstation an einem Ort, an dem Pilotsignale von mehreren Basisstation mit vergleichbarer Leistung empfangen werden können, ergibt sich eine sogenannte Pilotpollution, das heißt eine Störung der Pilotsignale untereinander. Die Analyse von $E_c/N_0$ und Pilotpollution ist zwar ein Qualitätsmaß für WCDMA-Netze, jedoch führen diese nicht zielgerichtet auf die notwendigen Maßnahmen der Optimierung von nicht zu akzeptierenden Stellen / Gebieten hin. Zur Optimierung der Funkversorgung, z.B. hinsichtlich der Pilotpollution und $E_c/N_o$, bieten sich in einem vorhandenen Netz die Änderung der Antennenabsenkung, das heißt Verringerung der Antennenhöhe sowie die Modifizierung der CPICH-Power (Leistung des Common Pilot Channel) an. Als Grundlage hierfür ist eine Interferenzanalyse notwendig. Diese kann mit der Hilfe einer Interferenzmatrix geschehen.
Um eine Interferenzmatrix zu erstellen wird für jedes Pixel (Kachelung) in einem z.B. 10 dB Fenster (window) unterhalb der als Best Server gemessenen Station als Störer registriert. Dieses Vorgehen ist schematisch in Figur 1 dargestellt. Damit Stationen, die für das sogenannte Soft Handover (SHO) notwendig sind, nicht als Störer gewertet werden, müssen diese durch ein weiteres window aus der Betrachtung herausgenommen werden. Hierzu ist die zugelassene Anzahl der Stationen im Active Set und ein weiteres Fenster, z.B. 3 dB-window (add window für Handover HO), zu definieren. Im Beispiel nach Figur 1 stellt die Basisstation mit dem Scramblingcode SC1 den Best Server dar. Die Stationen mit den Scramblingcodes SC2 und SC3 sind nur unwesentlich schwächer und liegen innerhalb eines Fensters von 3 dB unterhalb der Leistung des Best Servers. Die drei Stationen SC1, SC2 und SC3 werden daher für den Soft Handover verwendet. Die übrigen Stationen SC4-SC6 liegen in ihren Leistungen in einem Fenster von z.B. 10 dB unterhalb des Best Servers und werden als Störer gewertet.
Je nach Realisierung des Verfahrens ist das window der Störer auf den Best Server oder Best Server (negative Werte) + add window bezogen.
Pro Flächenelement (Pixel) werden nach dem oben beschriebenen Schema die Störer ermittelt. Diese Daten werden in eine Matrix zusammengefasst. In dieser Matrix wird die Störbeziehung jeder Station zu anderen Stationen mit der Anzahl der Häufigkeit aufgelistet.
In der Matrix gemäß Figur 2 ist in der Einzelanalyse genau ersichtlich, in welchen Zellen und mit welcher Häufigkeit eine Zelle (Basisstation) als Störer auftritt. Die Spalte der Basisstation SC 88 ist hervorgehoben. Man erkennt dass die Station SC88 die Station SC48 mit einer Häufigkeit von 125 stört, das heißt bei 125 Messungen wird SC48 von SC88 gestört.
Wenn nun bei jeder Station die Summe der Einzelstörungen gebildet wird, so erhält man eine Übersicht mit welcher Häufigkeit die einzelnen Stationen als Störer in dem Messgebiet auftreten. Eine solche Darstellung gemäß Figur 3 ergibt einen ersten Überblick, welche Station(en) ein hohes Potential an Störungen mitbringen.

Figur 3 ist zu entnehmen, dass die Station mit dem SC 88 den größten Störer im betrachteten Teilnetz darstellt.

Umgekehrt kann die Interferenzmatrix dazu genutzt werden zu sehen, mit welcher Häufigkeit und von welchen Zellen eine Zelle gestört wird. Dies ist in Figur 2 in der Zeile für Basisstation SC 48 hervorgehoben und kann äquivalent zu der Figur 3 dargestellt werden. Man erkennt, dass für die Zelle SC48 stellen die Zellen SC88 und SC224 die häufigsten Störer darstellen.

Figur 4 beschreibt eine Wahrscheinlichkeit der Störung bezogen auf eine Fläche. Um eine Wahrscheinlichkeit der Störung bezogen auf eine Fläche des Best Server zu erhalten, muss zuerst ermittelt werden, wie oft eine Zelle als Best Server in dem Messgebiet auftritt, das heißt bei wie vielen Messvorgängen diese Zelle als Best Server erfasst wird. Die gestörten Pixel (Flächenelemente) werden ins Verhältnis zu den ungestörten gesetzt und kann als Prozentzahl ausgegeben werden. Die so erhaltenen Werte sind über die Fläche gewichtet.

Beispiel: Bei 10.000 Messungen (= 10.000 Flächenelementen) wird die Zelle SC48 als Best Server ermittelt. Die Zelle SC88 tritt dabei 1903 mal als Störer auf. Die Wahrscheinlichkeit der Störung bezogen auf die gemessene Fläche beträgt daher 19,03 %, wie in aus Figur 4 hervorgeht.

Diese Aufbereitung der Daten bietet die zusätzliche Information in welchem Maße eine Zelle von der anderen gestört wird. Ansonsten ist Figur 4 genauso zu lesen wie die Figur 2.

Beide Interferenzmatrizen zusammen geben dem Betrachter ein sehr genaues Bild der Störbeziehungen und daraus resultierend die erforderlichen Maßnahmen.

Erkenntnisse

Die Aufbereitung der Interferenzbeziehungen in einem WCDMA-Netz gibt einem die Möglichkeit, das Störpotential von bestimmten Stationen, z.B. SC88, auf der Basis der Messdaten durch Antennenabsenkung oder Änderung der CPICH-Leistung zu verringern. Gemeinsam mit den anderen Darstellungen wie Best Server ($E_c$), $E_c/N_o$, Pilotpollution und der Ortskenntnis können so gezielt die Stationen zur Optimierung selektiert werden. Anschließende Kontrollmessungen werden dann eine Verbesserung des $E_c/N_o$ und Pilotpollution erkennen lassen.

Da in WCDMA-Netzen die Minimierung von Interferenzen eine wichtige Größe für die Kapazität und Qualität darstellt, ist eine solche Analyse als sehr wichtig einzustufen.

Versorgungsaussage basierend auf Scanner-Meßdaten

Erfindungsgemäß kann nun in der Abhängigkeit der Verkehrslast eine Prognose für die Versorgungssituation durchgeführt werden.

Grundlage des im folgenden beschriebenen Verfahrens bilden Messwerte aus Pilotkanal-Messungen, die zunächst in einem UMTS-Netz ohne aktive Nutzer, das heißt ohne Verkehrslast, durchgeführt werden. Unter Vorgabe der Auslastung des Netzes im uplink und downlink wird basierend auf diesen Messwerten eine Versorgungsaussage für uplink und downlink getroffen. Um eine höhere statistische Sicherheit zu erlangen, können die Messwerte innerhalb bestimmter Wegintervalle gemittelt werden, und es kann die Versorgungsaussage basierend auf diesen mittleren Werten erfolgen.

Einleitend noch einige Anmerkungen zur Notation. Üblicherweise kennzeichnet $E_c$ die Chipenergie des Pilotkanals und $I_0$ die Interferenzleistungsdichte. Auch wenn im folgenden ausschließlich von Leistungen ausgegangen wird, soll die übliche Notation beibehalten werden; d.h. $E_c$ entspricht der Empfangsleistung des primary commom pilot channel (pCPICH). Ferner sind Sendeleistungen mit $S$ und Empfangsleistungen mit $P$ bezeichnet.

Versorgungsaussage für den uplink

Basierend auf den gemessenen Empfangspegel $E_c$ des Pilot-Signals lässt sich der Empfangspegel $P_{UL}$ im uplink berechnen über

$$P_{UL} = E_c + S_{MS\,max} - S_{pCPICH} \qquad (1)$$

mit

$S_{MS\,max}$ Maximale Sendeleistung der Mobilstation
$S_{pCPICH}$ Pilotkanal-Sendeleistung der Basisstation

Bei der Bestimmung von $P_{UL}$ nach (1) ist zu bedenken, dass die gemessene Empfangsleistung des Pilotkanals nicht unmittelbar sondern erst nach dem Korrelationsempfang bestimmt werden kann. Demnach fließt in $E_c$ der Orthogonalitätsfaktor ein. Da das Pilotsignal nur mit einem RAKE-Finger des Empfängers detektiert wird, ist der Orthogonalitätsfaktor für einen RAKE-Finger zu verwenden. Somit ergibt sich die reale Empfangsleistung aus der vom Messgerät ermittelten Empfangsleistung $E_{c,mess}$ über

$$E_c = E_{c,mess} / \alpha_1 \tag{2}$$

wobei $\alpha_1$ dem Orthogonalitätsfaktor für einen RAKE-Finger entspricht. Das so ermittelte $E_c$ ist bei den hier angegebenen Gleichungen zu verwenden.

Ein Dienst ist im uplink verfügbar, wenn die Empfangsleistung $P_{UL}$ einen dienstspezifischen erforderlichen Mindest-Empfangspegel $P_{erf,UL}$ überschreitet. $P_{erf,UL}$ (in dBm) lässt sich basierend auf dem $E_b/N_0$-Sollwert, der zur Sicherstellung einer Datenübertragung in ausreichender Qualität gegeben sein muss, berechnen über

$$P_{erf,UL}=10\cdot\log(kT_0)+N_{f,BS}+(E_b/N_0)_{soll} + 10\cdot\log(R)+L_{pen}+N_r -G_{TMA}+ 30 \tag{3}$$

mit

| | |
|---|---|
| $k$ | Boltzmann-Konstante (=$1{,}38\cdot10^{-23}$ Ws/Kelvin) |
| $T_0$ | Umgebungstemperatur (in Grad Kelvin) |
| $N_{f,BS}$ | Rauschfaktor der Basisstation (dB) |
| $(E_b/N_0)_{soll}$ | Sollwert (dB) für $E_b/N_0$ der für Verfügbarkeit eines Dienstes vorhanden sein muss. |
| $R$ | Nutzdatenrate (Dienste-spezifisch) (kb/s) |
| $L_{pen}$ | Penetrationsdämpfung (dB) |
| $N_r$ | Anstieg des Rauschens durch Verkehr (=noise rise) (dB) |
| $G_{TMA}$ | Gewinn durch einen antennennahen Vorverstärker (TMA) |

Sowohl $(E_b/N_0)_{soll}$ als auch die Nutzdatenrate $R$ können für jeden Dienst unterschiedlich sein, weshalb $P_{erf,UL}$ für jeden betrachteten Dienst separat zu berechnen ist. Der Anstieg des Rauschens wird durch die Interferenzleistung der aktiven Nutzer verursacht und ist entsprechend des Verkehrsszenarios einzusetzen. Dabei entsprechen $N_r$= 3 dB einer Last von 50%. Diese Wert wurde rechnerisch ermittelt.
Mit (3) wird ein Dienst als im uplink verfügbar angesehen, wenn gilt

$$P_{UL} > P_{erf,UL} \tag{4}$$

$P_{UL}$ nach (1) basiert auf downlink Messwerten, so dass der Einfluss der Antennendiagramme und die Zuführungsverluste (z.B. Kabelverluste) in $P_{UL}$ implizit enthalten sind und bei Berechnung von $P_{erf,UL}$ nicht gesondert berücksichtigt werden müssen.

Versorgungsaussage für den downlink

Damit ein Dienst im downlink verfügbar ist, müssen zwei Bedingungen erfüllt sein.

- Der Empfangspegel liegt über den erforderlichen Mindestempfangspegel
- Der vorhandenen Wert für $E_b/N_0$ ist größer als der entsprechende Zielwert.
  Die erste Bedingung lässt sich zwar unmittelbar aus der zweiten ableiten, wird hier aber dennoch einzeln betrachtet.

Bestimmung des für einen Dienst notwendigen Empfangspegels

Zunächst sei die erste Bedingung betrachtet.
Im downlink lässt sich die Empfangsleistung eines Verkehrskanals $P_{TCH}$ basierend auf den gemessenen Empfangspegel

$E_c$ des Pilot-Signals berechnen über

$$P_{TCH} = E_c + S_{TCH\,max} - S_{pCPICH} \qquad (5)$$

mit

$S_{TCH\,max}$     Max. Sendeleistung eines Verkehrskanals, die einem einzelnen Nutzer zugestanden wird.

$S_{pCPICH}$     Pilotkanal-Sendeleistung der Basisstation

Der Mindestempfangspegel $P_{erf,DL}$ (in dBm) wird über

$$P_{erf,DL}=10\cdot\log(kT_0)+N_{f,MS}+(E_b/N_0)_{soll} + 10\cdot\log(R)+L_{pen} + 30 \qquad (6)$$

berechnet. $N_{f,MS}$ entspricht dem Rauschfaktor der Mobilstation. Die anderen Größen sind analog zu (3). Prinzipiell müsste analog zum uplink auch im downlink der Anstieg der Rauschens durch Interferenzleistung aktiver Nutzer berücksichtigt werden. Dieser Aspekt wird jedoch im downlink primär durch die Abschätzung des $E_b/N_0$-Wertes (wie unten beschrieben) berücksichtigt und daher bei Berechnung von $P_{erf,DL}$ außer Acht gelassen.

Ermittlung von Eigen- und Fremdzell-Empfangsleistung

Die oben aufgeführte zweite Bedingung - der vorhandenen Wert für $E_b/N_0$ ist größer als der entsprechende Zielwert - erfordert, dass man eine Aussage über den aktuellen Wert von $E_b/N_0$ treffen kann. Grundlage dafür bieten die Messwerte $E_c$ und $E_c/I_0$. Im folgenden wird beschrieben, wie basierend auf diesen Messwerten ein Wert von $E_b/N_0$ bei Vorgabe einiger Annahmen bestimmt werden kann.

Zur Berechnung des $E_b/N_0$ -Wertes im downlink ist es erforderlich, die Empfangsleistung aus der eigenen Zelle ($I_{eig}$) und die Empfangsleistungen aus allen Fremdzellen ($I_{fr}$) zu bestimmen. Die "Eigene Zelle" entspricht der Basisstation, die innerhalb eines Wegintervalls den mittleren höchsten Pilotkanal-Empfangspegel bewirkt (= Best Server).

Zunächst wird $I_{eig}$ bestimmt. Geht man davon aus, dass die Pilotkanal-Messungen in einem Netz ohne Verkehrslast erfolgt, so resultiert die Empfangsleistung $I_0$ aus den permanent sendenden downlink common control Kanälen.

Die Empfangsleistung $P_{CCH}$ dieser Kontrollkanäle ergibt sich über

$$P_{CCH} = E_c + 0.1\cdot P_{pSCH} + 0.1\cdot P_{sSCH} + 0.9\cdot P_{BCH} \qquad (7)$$

mit

$P_{CCH}$     Empfangsleistung aller permanent sendenden downlink commom control Kanäle

$E_c$     Empfangsleistung des Pilotkanals

$P_{pSCH}$     Empfangsleistung des primary syncronisation channel (pSCH)

$P_{sSCH}$     Empfangsleistung des secondary syncronisation channel (pSCH)

$P_{BCH}$     Empfangsleistung des broadcast channel (BCH)

Da pSCH und sSCH alternierend mit dem BCH gesendet werden, wird in (7) deren Sendeleistung mit einem Faktor gewichtet, der dem jeweiligen Anteil an der Sendezeit entspricht.

Die Sendeleistung der anderen downlink common control Kanäle wird relativ zu der des Pilotkanals angegeben. Somit lässt sich (7) mit

$$P_{CCH} = E_c \cdot (1 + 0.1 \cdot \Delta_{pSCH} + 0.1 \cdot \Delta_{sSCH} \ 0.9 \cdot \Delta_{BCH}) \qquad (8)$$

formulieren, wobei $\Delta$ dem Verhältnis der entsprechenden Sendeleistungen zu derjenigen des Pilotkanals entspricht. Vereinfacht gilt somit

$$P_{CCH} = E_c \cdot (1 + \Delta_{cch}) \qquad (9)$$

Unter der Annahme, dass die Interferenzleistung $I_0$ nicht durch aktive Nutzer sondern ausschließlich durch die downlink common control Kanäle erzeugt wird, erhält man letztlich

$$I_{eig} = P_{CCH} = E_c \cdot (1 + \Delta_{cch}) \qquad (10)$$

Mit $I_{eig}$ nach (10) wird nun $I_{fr}$ bestimmt. Für das Verhältnis $E_c/I_o$ gilt

$$\frac{E_c}{I_o} = \frac{E_c}{I_{eig} + I_{fr}} \qquad (11)$$

Darin ist das Hintergrundrauschen nicht enthalten, was bei der Messung allerdings mit erfasst wird. Daher ist die thermische Rauschleistung vom gemessenen $I_o$ ($=I_{o,mess}$) zu subtrahieren

$$I_o = I_{o,mess} - k \cdot T \cdot W. \qquad (12)$$

Somit folgt mit (10) aus (11) für das Verhältnis $I_{eig}/I_{fr}$

$$\frac{I_{eig}}{I_{fr}} = \frac{E_c/I_o}{1/(1 + \Delta_{cch}) - E_c/I_o} \qquad (13)$$

und $I_{fr}$ ist gegeben mit

$$I_{fr} = I_0 - E_c \cdot (1 + \Delta_{cch}) . \qquad (14)$$

Berechnung von $\underline{E_b/N_0}$

Aus den gemessenen Werten von $E_c/I_o$ ohne Verkehr soll basierend auf bestimmten Annahmen für die Auslastung einer Basisstation im downlink der Wert für $E_b/N_0$ eines Dienstes bestimmt werden. Voraussetzung dafür ist die Aufteilung der Gesamt-Empfangsleistung $I_o$ in $I_{eig}$ und $I_{fr}$ nach (10) und (14).
Allgemein wird $E_b/N_0$ im downlink berechnet über

$$\frac{E_b}{N_0} = \frac{W}{R} \frac{P_{TCH}}{I'_{eig} \cdot (1-\alpha) + I'_{fr} + I_h} \tag{15}$$

wobei das Apostroph die Variablen unter Einbeziehung des Interferenzleistungen durch Verkehrskanäle kennzeichnet. Ferner gilt

$P_{TCH}$     Empfangsleistung (downlink) des Verkehrskanals für einen Nutzer eines bestimmten Dienstes.

W     Chiprate

$\alpha$     Orthogonalitätsfaktor. Hier ist jedoch derjenige für mehr als ein RAKE-Finger anzugeben; z.B. für 4 RAKE-Finger.

Für die anschließenden Betrachtungen gelten folgende Annahmen.
Die Sendeleistung des Pilot-Kanals $S_{pCPICH}$ wird relativ zur Gesamtsendeleistung $S_{BS}$ der Basisstation angegeben.

$$S_{pCPICH} = \Delta_{pCPICH} \cdot S_{BS}. \tag{16}$$

Damit folgt für die Sendeleistung aller downlink common control channels analog zu Gleichung (9)

$$S_{CCH} = \Delta_{pCPICH} \cdot (1 + \Delta_{CCH}) \cdot S_{BS}. \tag{17}$$

Die Auslastung der Basisstation im downlink wird über die verwendete Leistung aller Verkehrskanäle definiert, die ebenfalls relativ zur Gesamtsendeleistung $S_{BS}$ der Basisstation angegeben wird. Demnach ergibt sich die Sendeleistung $S_{aTCH}$, die für alle Verkehrskanäle einer Zelle verwendet wird, aus

$$S_{aTCH} = \Delta_{aTCH} \cdot S_{BS}. \tag{18}$$

Der Wert für $\Delta_{aTCH}$ wird gemäß des gewünschten Verkehrsszenarios vorgegeben. Er bestimmt die Auslastung des Netzes im downlink.
Die maximale Sendeleistung $S_{TCH\,max}$, die einem einzelnen Nutzer zur Verfügung steht, wird ebenfalls relativ zur Gesamtsendeleistung $S_{BS}$ der Basisstation angegeben

$$S_{TCH\,max} = \Delta_{uTCH} \cdot S_{BS}. \tag{19}$$

Basierend auf diesen Annahmen lassen sich die in (15) enthaltenen Terme aus den Pilotkanal-Messdaten bestimmen.
Für die Fremdzellen-Interferenz-Leistung $I'_{fr}$ unter Einbeziehung der zusätzlichen Interferenz $P_{aTCH}$ durch Verkehrskanäle gilt

$$\frac{I'_{fr}}{I_{fr}} = \frac{P_{CCH} + P_{aTCH}}{P_{CCH}} = 1 + \frac{\Delta_{aTCH}}{\Delta_{pCPICH} \cdot (1 + \Delta_{CCH})} \cdot \qquad (20)$$

Nach Berechnung von $I_{fr}$ mittels (14) ist somit $I'_{fr}$ unmittelbar bestimmt.

Für die Eigenzell-Interferenzleistung $I'_{eig}$ unter Einbeziehung der zusätzlichen Interferenz $I_{aTCH}$ durch alle Verkehrskanäle der eigenen Zelle gilt

$$I'_{eig} = I_{eig} + I_{aTCH} \qquad (21)$$

mit

$$I_{aTCH} = E_c \cdot \frac{\Delta_{aTCH}}{\Delta_{pCPICH}} \qquad (22) \ .$$

erhält man

$$I'_{eig} = E_c \cdot \left( 1 + \Delta_{CCH} + \frac{\Delta_{aTCH}}{\Delta_{pCPICH}} \right) \qquad (23)$$

Analog dazu gilt für die maximale Verkehrskanal-Empfangsleistung, die einem Nutzer eines Dienstes zur Verfügung steht

$$P_{TCH\,max} = E_c \frac{\Delta_{vTCH}}{\Delta_{pCPICH}} \qquad (24)$$

Durch Einsetzen von (20), (23) und (24) in (15) erhält man den Downlink-$E_b/N_0$-Wert basierend auf Pilotkanal-Messwerten.

Zusammenfassend sollen die Voraussetzungen nochmals genannt werden.

- Die Empfangsleistung $I_0$ enthält keine Interferenzleistung durch Verkehrskanäle aktiver Nutzer.
- Für die Verkehrskanal-Sendeleistung eines Nutzers wird pauschal die maximal erlaubte Sendeleistung angenommen.
- Die Auslastung der Zellen im downlink wird für alle Zellen einheitlich vorgegeben.

**Patentansprüche**

1. Verfahren zur Analyse der Interferenzsituation und Funkfeldversorgung in UMTS-Teilnetzen, mit den Schritten:

   Erfassen von Messdaten innerhalb von vorgegebenen Flächenelementen eines begrenzten Gebiets, wobei innerhalb jedes Flächenelements die Empfangsleistung mindestens eines downlink Pilotkanals von mehreren in diesem Flächenelement empfangbarer Basisstationen und die gesamte Interferenzleistung im betrachteten Frequenzband gemessen werden, **gekennzeichnet durch**
   Erfassen der Messdaten im Leerlauf des Netzes, d.h. ohne Verkehrlast, wobei die Messdaten die Empfangs-

leistung des Pilotkanals $E_C$, die gesamte in dem betreffenden Frequenzband von 5 MHz vorliegende Interferenzleistung $I_0$ sowie das Verhältnis von $E_C/I_0$ umfassen,

Zuordnung der Messwerte zu einer Basisstation über einen Scramblingcode SC, der ebenfalls detektiert und ausgewiesen wird,

Erstellen einer Interferenzmatrix anhand der erfassten Messdaten, wobei zur Erstellung der Interferenzmatrix für jedes Flächenelement Basisstationen, deren Leistung in einem Fenster von 10 dB unterhalb einer als Best Server gemessenen Basisstation liegen, als Störer registriert werden, wobei die Interferenzmatrix eine Aussage über die Störbeziehung jeder Basisstation zu anderen Basisstationen wiedergibt, wobei Basisstationen, die für ein Soft Handover, SHO, notwendig sind, nicht als Störer gewertet werden.

2. Verfahren nach Anspruch 1, **dadurch gekennzeichnet, dass** die Basisstationen, die für das sogenannte Soft Handove, SHO, notwendig sind, durch ein weiteres Fenster aus der Betrachtung herausgenommen werden.

3. Verfahren nach einem der Ansprüche 1 oder 2, **dadurch gekennzeichnet, dass** in der Interferenzmatrix die Störbeziehung jeder Basisstation zu anderen Basisstationen mit der Anzahl der Häufigkeit aufgelistet wird.

4. Verfahren nach einem der Ansprüche 1 bis 3, **dadurch gekennzeichnet, dass** durch Bildung der Summe der Einzelstörungen für jede Basisstation ermittelt wird, mit welcher Häufigkeit die einzelnen Basisstationen als Störer in dem Messgebiet auftreten.

5. Verfahren nach einem der Ansprüche 1 bis 4, **dadurch gekennzeichnet, dass** eine Wahrscheinlichkeit der Störung bezogen auf eine Fläche des Best Server festgestellt wird, indem ermittelt wird, wie oft eine Zelle als Best Server in dem Messgebiet auftritt, das heißt bei wie vielen Messvorgängen diese Zelle als Best Server erfasst wird, wobei die gestörten Flächenelemente in ein Verhältnis zu den ungestörten gesetzt und als Prozentwert ausgegeben werden.

**Claims**

1. Method for the analysis of the interference situation and radio-link hop provision in UMTS subnetworks having the steps:

capture of measured data within predetermined unit areas in a bounded region, wherein within each unit area the received power of at least one downlink pilot channel out of a plurality of base stations receivable in this unit area and the total interference power in the frequency band under consideration are measured,

**characterised by**

capture of the measured data when the network is idling, i.e. without traffic load, wherein the measured data encompass the received power of the pilot channel $E_C$, the total interference power $I_0$ occurring in the 5 MHz frequency band in question as well as the ratio $E_C/I_0$, assignment of the measured values to a base station via a scrambling code SC which is likewise detected and identified,

drawing up an interference matrix on the basis of the data captured, wherein for drawing up the interference matrix for each unit area base stations whose power lies in a window of 10 dB below a base station measured as best server are registered as interferers, wherein the interference matrix gives an account of the interference relationship of each base station to other base stations, wherein base stations needed for a soft handover, SHO, are not evaluated as interferers.

2. Method according to claim 1, **characterised in that** the base stations needed for the so-called soft handover, SHO, are taken out of consideration by another window.

3. Method according to one of claims 1 or 2, **characterised in that** in the interference matrix the interference relationship of each base station to other base stations is listed with the number of occurrences.

4. Method according to any of claims 1 to 3, **characterised in that** by summing the individual interference events for each base station the frequency with which the individual base stations appear as interferers in the test region is determined.

5. Method according to any of claims 1 to 4, **characterised in that** a probability of interference with respect to an area of the best server is established by determining how often a cell appears as best server in the test region, that is to say in how many measurement operations this cell is detected as best server, wherein the unit areas subject to interference are set in a ratio to those not subject to interference and output as a percentage value.

**Revendications**

1. Procédé pour analyser la situation d'interférence et la couverture de champ radio dans des sous-réseaux de systèmes universels de télécommunications mobiles UMTS, avec les étapes suivantes :

    détection de données de mesure à l'intérieur d'éléments de surface prédéfinis d'une zone limitée, étant précisé qu'à l'intérieur de chaque élément de surface la puissance de réception d'au moins un canal pilote de liaison descendante de plusieurs stations de base aptes à être reçues dans cet élément de surface et la puissance d'interférence totale dans la bande de fréquence considérée sont mesurées,
    **caractérisé par** la détection des données de mesure en marche à vide du réseau, c'est-à-dire sans charge de trafic, les données de mesure comprenant la puissance de réception du canal pilote $E_c$, la puissance d'interférence $I_0$ totale présente dans la bande de fréquence concerné de 5 MH, et le rapport de $E_c/I_0$,
    l'affectation des valeurs de mesure à une station de base par l'intermédiaire d'un code de brouillage SC qui est également détecté et enregistré,
    l'établissement d'une matrice d'interférence à l'aide des données de mesure détectées, étant précisé que pour établir la matrice d'interférence, pour chaque élément de surface des stations de base dont la puissance se situe dans une fenêtre de 10 dB au-dessous d'une station de base mesurée comme meilleur serveur sont enregistrées comme brouilleurs, que la matrice d'interférence donne une indication sur la relation de brouillage de chaque station de base par rapport aux autres stations de base, et que les stations de base qui sont nécessaires pour un Soft Handover, SHO, ne sont pas considérées comme des brouilleurs.

2. Procédé selon la revendication 1, **caractérisé en ce que** les stations de base qui sont nécessaires pour ce qu'on appelle le Soft Handover, SHO, sont supprimées de l'observation grâce à une fenêtre supplémentaire.

3. Procédé selon la revendication 1 ou 2, **caractérisé en ce que** dans la matrice d'interférence, une liste de la relation de brouillage de chaque station de base avec les autres stations de base est établie, avec la fréquence.

4. Procédé selon l'une des revendications 1 à 3, **caractérisé en ce qu'**on détermine, en formant la somme des brouillages individuels pour chaque station de base, à quelle fréquence les stations de base individuelles apparaissent comme brouilleurs dans la zone mesurée.

5. Procédé selon l'une des revendications 1 à 4, **caractérisé en ce qu'**on établit une probabilité de brouillage par rapport à une surface du meilleur serveur en déterminant la fréquence de l'apparition d'une cellule comme meilleur serveur dans la zone de mesure, c'est-à-dire en déterminant lors de combien d'opérations de mesure cette cellule est détectée comme meilleur serveur, les éléments de surface brouillés étant mis en relation avec les éléments de surface non brouillés et étant sortis sous forme de pourcentage.

**Fig. 1**

Labels in figure:
- max.number in active set
- Best Server
- Pegel [dBm]
- add window von 3 dB
- window für Interferer von 10 dB
- SC1, SC2, SC3, SC4, SC5, SC6

| SC der gestörten Stationen | | | | | |
|---|---|---|---|---|---|
| | 200 | 88 | 224 | 180 | 168 |
| 8 | 0 | 0 | 0 | 0 | 0 |
| 15 | 0 | 5 | 0 | 0 | 0 |
| 19 | 0 | 0 | 0 | 0 | 0 |
| 40 | 0 | 0 | 0 | 0 | 0 |
| 41 | 12 | 0 | 0 | 0 | 0 |
| 48 | 1 | 125 | 28 | 0 | 5 |
| 62 | 5 | 0 | 0 | 17 | 0 |
| 64 | 0 | 11 | 0 | 0 | 2 |
| 70 | 0 | 0 | 0 | 0 | 0 |
| 74 | 0 | 5 | 0 | 0 | 10 |
| Summe | 18 | 146 | 28 | 17 | 17 |

SC 88 stört mit der aufgeführten Häufigkeit andere Zellen

SC 48 wird von den eingekreisten SC in der angegebenen Häufigkeit gestört

**Fig. 2**

SC der
Störer

**Fig. 3**

**Fig. 5**

| SC der gestörten Stationen | störende Zellen | | | | |
|---|---|---|---|---|---|
| | 200 | 88 | 224 | 180 | 168 |
| 8 | 0 | 0 | 0 | 0 | 0 |
| 15 | 0 | 2,06 | 0 | 0 | 0 |
| 19 | 0 | 0 | 0 | 0 | 0 |
| 40 | 0 | 0 | 0 | 0 | 0 |
| 41 | 20,34 | 0 | 0 | 0 | 0 |
| 48 | 0,15 | 19,03 | 4,26 | 0 | 0,76 |
| 62 | 2,81 | 0 | 0 | 9,55 | 0 |
| 64 | 0 | 5,05 | 0 | 0 | 0,92 |
| 70 | 0 | 0 | 0 | 0 | 0 |
| 74 | 0 | 5,68 | 0 | 0 | 11,36 |
| | 23,3 | 31,82 | 4,26 | 9,55 | 13,04 |

**Fig. 4**

**EP 1 611 757 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0145284 A1
- DE 4302228 A1